# EUROPÄISCHE PATENTSCHRIFT

(11) **EP 2 115 089 B1**
(45) Veröffentlichungstag und Bekanntmachung des Hinweises auf die Patenterteilung: **13.03.2013**
(21) Anmeldenummer: 08707114.8
(22) Anmeldetag: 17.01.2008
(51) Int. Cl.: C09K 5/06, F28D 20/00, F28D 20/02

(54) **VERWENDUNG VON MIT SCHMELZBAREN MATERIALIEN GEFÜLLTEN HOHLKÖRPERN ALS LATENTWÄRMESPEICHER**
USE OF HOLLOW BODIES FILLED WITH MELTABLE MATERIALS AS LATENT HEAT ACCUMULATORS
UTILISATION DE CORPS CREUX REMPLIS DE MATIERES FUSIBLES EN TANT QU'ACCUMULATEURS DE CHALEUR LATENTE

(30) Priorität: 18.01.2007 DE 102007002797
(43) Veröffentlichungstag der Anmeldung: 11.11.2009
(73) Patentinhaber: AlzChem AG, 83308 Trostberg (DE)
(72) Erfinder: GUETHNER, Thomas, 83308 Trostberg (DE)
(74) Vertreter: Dey, Michael
(86) Internationale Anmeldenummer: PCT/EP2008/000349
(87) Internationale Veröffentlichungsnummer: WO 2008/087033

(56) Entgegenhaltungen:
- EP-A- 0 623 662
- WO-A-2006/018130
- DE-A1- 2 523 234
- DATABASE WPI Week 198249 Derwent Publications Ltd., London, GB; AN 1982-05844J XP002481775 & JP 57 177085 A (NIPPON PETROCHEMICALS CO LTD) 30. Oktober 1982 (1982-10-30)
- N.K.BANSAL, D.BUDDHI: "An analytical study of a latent heat storage system in a cylinder" ENERGY CONVERSION MANAGEMENT, Bd. 33, Nr. 4, 1992, Seite 235-242, XP002481774 in der Anmeldung erwähnt
- NIKOLIC R ET AL: "New materials for solar thermal storage-solid/liquid transitions in fatty acid esters" SOLAR ENERGY MATERIALS AND SOLAR CELLS, ELSEVIER SCIENCE PUBLISHERS, AMSTERDAM, NL, Bd. 79, Nr. 3, 15. September 2003 (2003-09-15), Seiten 285-292, XP004450906 ISSN: 0927-0248

## Beschreibung

Die vorliegende Erfindung betrifft die Verwendung von mit schmelzbaren Materialien gefüllten Hohlkörpern als Latentwärmespeicher in solaren Warmwasserspeichern.

Die Ausnutzung von Solarenergie zur Nutzung für die Warmwasserbereitung sowie zur Heizungsunterstützung ist heute sowohl vom ökologischen als auch vom wirtschaftlichen Standpunkt her sinnvoll. Da die Zeiten, zu denen die Energie bereitsteht (Sonnenschein) und zu denen die Energie benötigt wird (Abend, Morgen), nicht zusammenfallen, ist ein Energiespeicher vonnöten.

Die heute übliche technische Ausführung verwendet Speicher, die mit gewöhnlichem Wasser gefüllt sind. Unter Ausnutzung der Wärmekapazität von Wasser (ca. 4,18 J/g·K) wird sensitive Wärme gespeichert, indem der Speicher z.B. im Temperaturbereich zwischen 30 und 110°C zur Speicherung erhitzt und zur Wärmeentnahme wieder abgekühlt wird. Diese Vorgehensweise hat zum Nachteil, dass die entnommene Wärme je nach Energiebeladung des Speichers bei sehr unterschiedlichen Temperaturen bereitsteht. Dies ist sowohl für die häusliche Warmwasserversorgung (Verbrühungsgefahr bzw. zu kaltes "Warmwasser") als auch für die Heizungsunterstützung (Überhitzung des Heizkreislaufs bzw. zu niedrige Vorlauftemperatur) ungünstig. Durch eine Schichtung in Temperaturzonen innerhalb des Warmwasserspeichers kann eine gewisse Vergleichmäßigung der Entnahmetemperatur erreicht werden. Die im Allgemeinen aus technischen Gründen begrenzte Maximaltemperatur limitiert dennoch die Speicherkapazität, Insgesamt ist die Speicherkapazität von solaren Warmwasserspeichern begrenzt, was einer optimalen Ausnutzung der von der Sonne zur Verfügung gestellten Energie zuwiderläuft. Eine reine Vergrößerung des Speichervolumens ist kostenaufwendig und von den Platzverhältnissen her in den meisten Eigenheimen nicht möglich.

Latentwärmespeicher, die gewöhnlich eine wesentlich höhere Speicherkapazität als Speicher für sensitive Wärme aufweisen, sind prinzipiell bekannt, speziell auch für die Speicherung von solarer Nutzwärme (vgl. S.S. Dutt et. al., Res. Rep. Fac. Eng. Mie Univ. Vol.29, 31 (2004)). Allerdings wurden bislang technische Systeme konzipiert, die eine Einbindung in eine häusliche thermische Solaranlage erschweren bzw. unmöglich machen. Beispielsweise wurde vorgeschlagen, das gesamte Speichervolumen mit einem Latentwärmespeichermedium zu befüllen (vgl. N.K. Bansal et al., Solar Energy 33, 4235 (1992)). Nachteilig ist hier der schlechte Wärmetransfer zum und vom Speichermedium, die Notwendigkeit eines zusätzlichen Wärmetauschers zur Erzeugung von Warmwasser sowie apparative Probleme bei der Verfestigung des gesamten Speicherinhalts. Alternativ wurde vorgeschlagen, das gesamte Speichervolumen mit Röhren zur Wärmeübertragung zu durchziehen (vgl. D. Buddhi, Proc. ISES Solar World Congress 1997). Auf diese Weise wird eine hohe Wärmetransferrate erreicht, allerdings unter Inkaufnahme eines hohen konstruktiven Aufwandes. Kugelförmige Kapseln mit eingeschlossenem Latentwärmespeicher wurden ebenfalls bereits beschrieben, z.B. zur Erzeugung warmer Luft für Heizzwecke (vgl. K.K. Sagara et.al., Mie Academic Press, B2, 83 (1994)). Mikroverkapselte Latentwärmespeicher sind bekannt, aufgrund der begrenzten Stabilität der Mikrokapseln und der Dispergierbarkeit im Brauchwasser für die vorliegende Aufgabe jedoch nicht zu gebrauchen.

WO 2006/018130 A1 betrifft eine Mikrokapselzubereitung, welche Mikrokapseln mit einem Kapselkern aus Latentwärmespeichermaterial und einem duroplastischen Polymer als Kapselwand sowie mindestens ein polymeres Bindemittel umfasst und in Wärmetauschern von Solaranlagen eingesetzt werden kann. Als Latentwärmespeichermaterial können u.a. C₁₋₁₀-Alkylester von Fettsäuren, wie beispielsweise Propylpalmitat, Methylstearat und Methylpalmitat, verwendet werden.

JP 57-177085 A beschreibt ein Wärmespeichermaterial, welches aus Säureamiden der allgemeinen Formel CₙH₂ₙ₊₁-CO-NH-CₚH₂ₚ₊₁ (mit n = 15-18; p = 1-18) besteht und u.a. im Bereich der Solarenergie eingesetzt werden kann. Die Säureamide werden durch Umsetzung geeigneter Fettsäuren, wie beispielsweise Palmitinsäure oder Stearinsäure, mit einem primären Amin, wie beispielsweise Methylamin oder Octadecylamin, erhalten.

Bansal et al. (Energy Conversion Management (1992), 33, 235-242) offenbaren Untersuchungen an einem zylindrischen Latentwärmespeichersystem, welches ein Phasenübergangsmaterial zur Aufnahme bzw. Abgabe von Energie umfasst und im Bereich der Solarenergie verwendet werden kann. Als Phasenübergangsmaterial werden Paraffinwachs und Stearinsäure als spezifische Beispiele genannt.

Nikolić et al. (Solar Energy Materials & Solar Cells (2003), 79, 285-292) beschreiben Wärmspeichermaterialien, welche nahe Raumtemperatur einen fest/flüssig-Phasenübergang vollziehen und im Bereich der Solarenergie Anwendung finden. Als Beispiele für derartige Wärmespeichermaterialien werden Methylpalmitat, Methylstearat, Cetylpalmitat, Cetylstearat, sowie binäre Gemische hiervon genannt.

EP 0 623 662 A1 offenbart Mikrokapseln zur Einlagerung von Wärmespeichermaterial, welche eine zur Durchführung von Phasenübergängen befähigte Verbindung umschließen, wobei die Mikrokapseln eine hochschmelzende Verbindung mit einem Schmelzpunkt von 20-110°C über dem Schmelzpunkt der zur Durchführung von Phasenübergängen befähigten Verbindung umfassen. Als Beispiele für derartige hochschmelzende Verbindungen werden u.a. Stearinsäureamid und Laurinsäureamid genannt.

DE 25 23 234 A1 beschreibt einen Wärmespeicher mit einem in einer kristallinen Struktur eingebetteten Wärmetauscher, dessen maximale Betriebstemperatur höher liegt als die Schmelztemperatur der kristallinen Substanz. Die kristalline Substanz und der Wärmetauscher sind hierbei in einem durch vernetzten Kunststoff gebundenen Formkörper integriert, wobei der Formkörper weiterhin die Wärmeleitfähigkeit steigernde Materialien, wie beispielsweise Aluminium, umfassen kann.

Der Erfindung lag daher die Aufgabe zugrunde, die Wärmespeicherkapazität von solaren Warmwasserspeichern deutlich zu erhöhen und den Temperatur-Arbeitsbereich zu begrenzen, ohne die Bauform der heute gebräuchlichen Speicher zu verändern. Idealerweise sollte die Erfindung es ermöglichen, bereits installierte und in Betrieb befindliche solare Warmwasserspeicher so auf- bzw. umzurüsten, dass ihre Speicherkapazität erhöht und eine Vergleichmäßigung der Entnahmetemperatur erreicht wird.

Diese Aufgabe wurde erfindungsgemäß dadurch gelöst, dass man mit schmelzbaren Materialien, bestehend aus Carbonsäureamiden und/oder Carbonsäureestern, gefüllte Hohlkörper als Latentwärmespeicher in solaren Warmwässerspeichern einsetzt.

Es hat sich hierbei überraschenderweise gezeigt, dass die Gesamt--Wärmespeicherfähigkeit des Systems deutlich erhöht und die Wärmespeicherfähigkeit auf den Bereich des Schmelzpunktes des schmelzbaren Materials konzentriert wird, so dass die bevorzugte Entnahmetemperatur durch die Art des eingesetzten schmelzbaren Materials einstellbar ist.

Erfindungsgemäß werden Hohlkörper als Latentwärmespeicher in solaren Warmwasserspeichern eingesetzt, die mit schmelzbaren Materialien aus Carbonsäureamiden der angemeinen Formel (I)

R¹-CO-NHR² (I)

und/oder Carbonsäureestern der allgemeinen Formel (II)

R¹-COOR³ (II)

gefüllt sind.

Hierbei steht R¹ für einen n-C₁-C₂₄-Alkylrest. R² bedeutet H oder ein C₁-C₂₄-Alkylrest, der ggf. mit einer oder mehreren OH-, R³O- oder NH₂-Gruppe(n) substituiert sein kann. R³ stellt ebenfalls einen C₁-C₂₄-Alkylrest dar, der gegebenenfalls noch einen oder mehrere Substituenten ausgewählt aus der Gruppe -OH, -OR³ oder -NH₂ aufweisen kann.

R¹ ist ein linearer Alkylrest und vorzugsweise ein n-C₃-C₂₄-Alkylrest, bevorzugt C₆-C₂₀ oder C₁₆-C₁₈. R² kann vorzugsweise ein unsubstituierter oder substituierter linearer oder verzweigter C₃-C₂₄, bevorzugt C₄-C₁₈-Alkylrest sein. R³ kann vorzugsweise ein substituierter oder unsubstituierter linearer oder verzweigter C₃-C₂₄, vorzugsweise C₄-C₁₈-Alkylrest sein.

Die erfindungsgemäß eingesetzten Carbonsäureamide und/oder -ester weisen vorzugsweise einen Schmelzpunkt im Bereich zwischen 30 und 110°C auf. Bevorzugt werden Materialien mit einem Schmelzpunkt im Bereich zwischen 40 und 80°C eingesetzt, besonders bevorzugt sind Materialien mit einem Schmelzpunkt im Bereich zwischen 50 und 70°C. Dabei werden preiswerte, ökologisch und gesundheitlich unbedenkliche Carbonsäureamide und/oder Carbonsäureester bevorzugt. Es versteht sich von selbst, dass die eingesetzten schmelzbaren Materialien auf Basis von Carbonsäureamiden und/oder -estern dauerhaft chemisch inert sind und somit einen über die Lebensdauer der Anlage konstanten Schmelzpunkt aufweisen.

Neben dem Schmelzpunkt ist die latente Wärme, d.h. die Schmelzenthalpie des schmelzbaren Materials entscheidend für die Speicherfähigkeit des Gesamtsystems. Deshalb werden Carbonsäureamide und/oder -ester mit einer Schmelzenthalpie größer 160 J/g bevorzugt. Besonders bevorzugt sind Materialien mit einer Schmelzenthalpie größer 200 J/g.

Bevorzugte Carbonsäureester sind n-C₁-C₄-Alkylstearat, n-C₁-C₄-Alkylpalmitat, Glyceryltrilaurat, Glyceryltripalmitat, Glyceryltristearat, 1,2-Ethylen-bis-stearat, 1,2-Ethylen-bis-palmitat, Diethylenglykol-distearat, Diethylenglykol-bis-palmitat, Stearamidoethylstearat bzw. Mischungen davon.

Als bevorzugte Carbonsäureamide sind Acetamid, Propionamid, Caproamid, Caprinamid, Pelargonamid, Lauramid, Myristinamid, Palmitinamid, Stearinamid sowie N-Stearylstearamid bzw. Kombinationen und Mischungen derselben anzusehen.

Zur Verdeutlichung der relevanten Eigenschaften der bevorzugten Materialien sei auf Tabelle 1 verwiesen:

| Tabelle 1 | | |
|---|---|---|
| Glyceryl-tripalmitat | 65°C | 260,4 J/g |
| Glyceryl-tristearat | 71 °C | 257,5 J/g |
| 1,2-Ethylen-bis-stearat | 77-79°C | 258 J/g |
| Acetamid | 81°C | 217,5 J/g |
| Propionamid | 75-78°C | 242,4 J/g |
| Butyramid | 114-115°C | 215,3 J/g |
| Capronamid | 101 °C | |
| Caprinamid | 104-106°C | |
| Lauramid | 101-102°C | 245,5 J/g |
| Pelargonamid | 98-99°C | |
| Myristinamid | 80-83°C | |
| Palmitinamid | 105-107°C | 266,5 J/g |
| Stearinamid | 107-109°C | 227,6 J/g |
| N-Stearyl-stearamid | 94°C | 211 J/g |
| Stearamidoethyl-stearat | 92-94°C | |

Das schmelzbare Material bestehend aus einem Carbonsäureamid und/oder -ester wird in nachfolgend näher spezifizierte Hohlkörper gefüllt und dieser so verschlossen, dass das Material dauerhaft eingeschlossen bleibt. Dies kann z.B. durch Steck- oder Schraubverschlüsse, bevorzugt jedoch durch Verschweißen geschehen.

Erfindungsgemäß haben die Hohlkörper ein Netto-Volumen von 1 bis 1500 cm³. Bevorzugt werden Hohlkörper mit einem Netto-Volumen von 30 bis 300 cm³. Grund hierfür ist, dass ein kleinerer Hohlkörper zwar einen schnellen Wärmetransfer von und zum schmelzbaren Material gewährleistet, jedoch ein relativ ungünstiges Verhältnis von Hohlkörpergewicht zum Gewicht des Inhalts aufweist. Zudem können sehr kleine Hohlkörper das Gesamt-System stören, indem sie z.B. durch eine vorhandene Rohrleitung hindurchpassen bzw. von der Strömung mitgerissen würden. Größere Hohlkörper würden eine zu geringe Wärmetransferrate von und zum schmelzbaren Material aufweisen, würden zudem evtl. durch die Inspektionsöffnung eines vorhandenen Warmwasserspeichers nicht hindurchpassen. Insofern ist das bevorzugte Hohlkörpervolumen technisch vorteilhaft.

Die Wandstärke der Behälter beträgt insbesondere 1/1.000 bis 1/10 der größten äußeren Abmessung der Behälter, vorzugsweise 1/100 bis 1/20.

Die erfindungsgemäßen Hohlkörper weisen eine im Umriss im wesentlichen kugelförmige-Gestalt auf, d.h. das Verhältnis von Länge zu Breite zu Tiefe beträgt in keiner Richtung mehr als 2:1, vorzugsweise nicht mehr als 1,5:1. Die Hohlkörper können gerundet oder eckig, ggf. mit Einbuchtungen und Höhlungen zur Vergrößerung der Kontaktfläche, gestaltet sein, sollten jedoch keine hervorspringenden Kanten oder Ecken aufweisen, so dass eine möglichst kompakte Schüttung im Sinne einer dichten Kugelpackung möglich wird. Die Schüttung sollte ein nutzbares Volumenverhältnis von Hohlkörpervolumen zu Gesamtvolumen der Schüttung von 0,5 zu 1 bis 0,85:1 aufweisen, vorzugsweise 0,6:1 bis 0,8:1.

Da die schmelzbaren Stoffe mit steigender Temperatur und beim Schmelzvorgang eine Volumenzunahme zeigen, sollten die Hohlkörper entweder
a) bei flexiblem Hohlkörpermaterial die Möglichkeit zur Ausdehnung haben , konstruktionsbedingt bevorzugt so gestaltet, dass bei Ausdehnung der äußere Umriss unverändert bleibt, oder
b) bei steifem Hohlkörpermaterial nur soweit gefüllt werden, dass Raum für die Ausdehnung des schmelzbaren Stoffes bleibt.

Da die Hohlkörper in großer Zahl in den solaren Warmwasserspeicher eingebracht werden, sollten die Hohlkörper einfach und kostengünstig herstellbar und dauerhaft im Einsatz sein. Zudem sollten die Hohlkörper, da sie in Kontakt mit Brauch- oder Trinkwasser stehen, keine gesundheitlich negativen Auswirkungen aufweisen. Deshalb werden Hohlkörper aus Kunststoffen, die ausgewählt sind aus Polyethylen, Polypropylen, Polyvinylchlorid, Polyamid, Polyester und/oder Polycarbonat, oder Metalle, wie z.B. Aluminium, Kupfer, Bronze, Messing, ferritischer Stahl (Normalstahl) oder austenitischer legierter Stahl (Chromnickelstahl bzw. Edelstahl), verwendet. In jedem Falle wird das Hohlkörpermaterial so gewählt, dass es gegenüber dem schmelzbaren Material und gegenüber Warmwasser beständig ist sowie eine zu vernachlässigende Penetrationsrate für das schmelzbare Material aufweist.

Die dichte Schüttung der im Wesentlichen kugelförmigen Hohlkörper ergibt Zwischenräume, die im Betrieb mit einer Flüssigkeit wie z.B. Wasser gefüllt werden. Dieses Wasser mehreren Zwecken. Einerseits ist es Wärmeüberträger vom solaren Heizkreislauf hin zu den mit schmelzbarem Material gefüllten Hohlkörpern. Andererseits nimmt es bei der Entnahme von Wärme aus dem Speicher die im schmelzbaren Material gespeicherte Energie wieder auf. Zudem wird - da das im Speicher enthaltene Wasser direkt zum Verbraucher fließt, keine weitere Wärmeübertragung notwendig. Die im Wasser gebundene sensitive Wärme liefert nur einen kleinen Beitrag zur gesamten Speicherkapazität des Warmwasserspeichers.

Durch die Schüttung der im Wesentlichen kugelförmigen Hohlkörper wird eine in allen Raumrichtungen isotrope Ausgestaltung der wassergefüllten Zwischenräume erreicht. Auf diese Weise ist eine gleichmäßige Wärmeverteilung innerhalb des gesamten Warmwasserspeichers gewährleistet. Insbesondere wird eine freie Konvektion des Wassers ermöglicht, so dass alle mit schmelzbarem Material gefüllten Hohlkörper gleichmäßig aufgeheizt werden, und die Energie als latente Wärme speichern können.

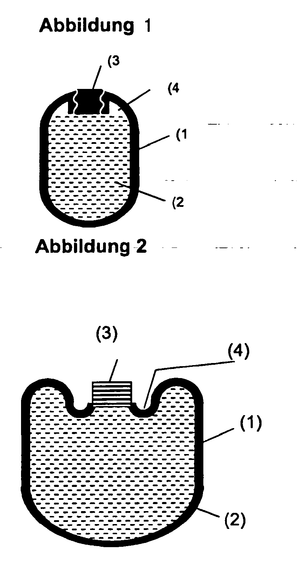

Typische Ausgestaltungen der erfindungsgemäßen Behälter sind in Abbildung 1 und Abbildung 2 skizziert.

Abbildung 1 zeigt einen rotationssymetrischen Hohlkörper bestehend aus einem Metallbehälter (1), dem schmelzbaren Material (2) aus einem Carbonsäureamid und/oder Carbonsäureester, dem Gewindestopfen (3) sowie dem Leervolumen (4).

Abbildung 2 stellt ebenfalls einen rotationssymetrischen Hohlkörper mit flacher Schweißnaht dar bestehend aus dem Kunststoffbehälter (1), dem schmelzbaren Material (2) aus einem Carbonsäureamid und/oder Carbonsäureester sowie einem verschweißten Stutzen (3). Der Kunststoffbehälter (1) weist zur Erhöhung der Kontaktfläche noch zwei Dehnfalten (4) auf.

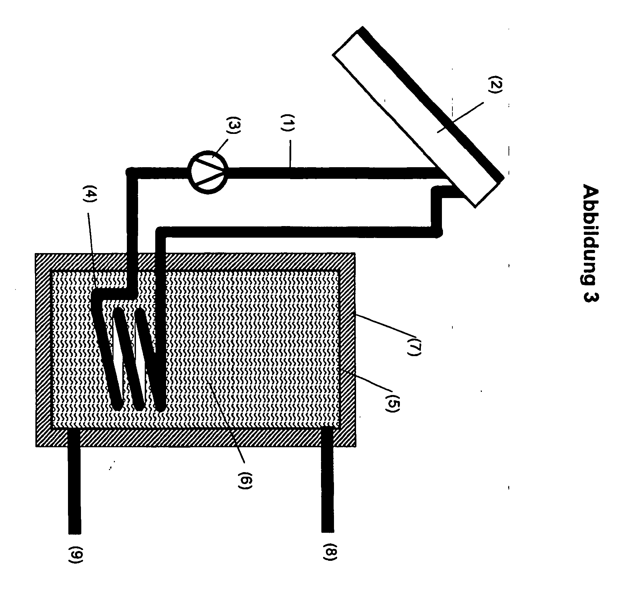

Eine typische Anlage zur solaren Brauchwassererwärmung, wie sie in Mitteleuropa gebräuchlich ist, ist in Abbildung 3 skizziert.

Ein Wärmeträgerkreislauf (1) mit eingebundenem Sonnenkollektor (2) wird durch eine Umwälzpumpe (3) zirkuliert. Das von der Sonne erwärmte Wärmeträgermedium heizt über einen Rohrwendelwärmetauscher (4) das im Warmwasserspeicher (5) befindliche Brauchwasser (6) auf, wobei der Warmwasserspeicher eine Wärmeisolation (7) besitzt. Bei Überschreiten einer Grenztemperatur wird die Pumpe (3) abgestellt. Wird Warmwasser aus dem Speicher (5) über den Ablauf (8) entnommen, so fließt am Boden des Speichers kaltes Wasser über Zulauf (9) nach. Es bildet sich eine Schichtung, so dass - zumindest für einen durch Wärmediffusion begrenzten Zeitraum - Warmwasser im oberen Teil des Speichers entnommen werden kann. Die Speicherkapazität ist erschöpft, wenn das austretende Warmwasser die Mindesttemperatur für Warmwassernutzung nicht mehr erreicht.

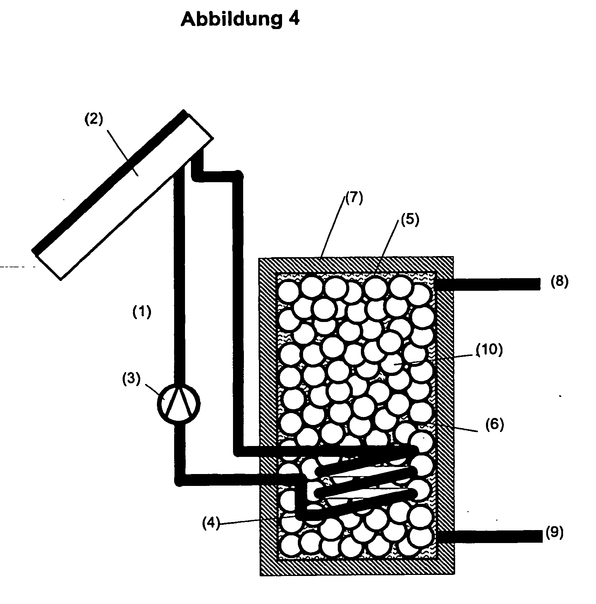

In Abbildung 4 ist die erfindungsgemäße Anlage zur solaren Brauchwassererwärmung dargestellt.

Diese Anlage besteht ebenfalls aus einem Wärmeträgerkreislauf (1), einem Sonnenkollektor (2), einer Umwälzpumpe (3), einem Wärmetauscher (4), einem Warmwasserspeicher (5) mit einer Wärmeisolation (7) sowie einem Warmwasserablauf (8) und einem Kaltwasserzulauf (9).

Erfindungswesentlich sind die im Warmwasserspeicher (5) befindlichen Hohlkörper (10), die mit schmelzbaren Materialien aus Carbonsäureamiden und/oder Carbonsäureestern gefüllt sind und die von Brauchwasser (6) umspült werden.

Beim erfindungsgemäßen Einsatz der - mit schmelzbarem Material gefüllten - Hohlkörper werden diese in den (anfangs entleerten) Warmwasserspeicher eingebracht, z.B. durch die üblicherweise vorgesehene Inspektionsöffnung. Dabei wird angestrebt, eine möglichst große Anzahl an Hohlkörpern einzubringen, d.h. eine dichte Schüttung über die gesamte Höhe des Warmwasserspeichers zu erzielen. Der Solarwärmespeicher wird dann in gewohnter Weise an die Wasserleitung angeschlossen, durch das sich die Zwischenräume zwischen den Hohlkörpern mit Brauchwasser füllen. Der Wasserdruck im Speicher hat die bei Haushaltsinstallationen üblichen Werte, z.B. im Bereich zwischen 2 und 10 bar.

Bei Sonnenschein trägt nun der von der Umwälzpumpe zirkulierte Wärmeträgerkreislauf Wärme in den Speicher ein. Zuerst erwärmt sich das Wasser in den Zwischenräumen zwischen den Behältern. Dieses konvektiert frei innerhalb des Speichers, so daß im oberen Teil des Speichers zuerst die Schmelztemperatur des schmelzbaren Materials erreicht wird. Ab diesem Zeitpunkt bleibt die Innentemperatur des Speichers annähernd konstant, solange, bis alles schmelzbare Material in allen eingebrachten Behältern geschmolzen ist. Dann steigt die Innentemperatur des Speichers weiter an, bis bei Erreichen einer zuvor festgelegten Grenztemperatur die Umwälzpumpe ausgeschaltet wird. Die Speicherkapazität des erfindungsgemäßen Warmwasserspeichers ist dann erreicht.

Bei Entnahme von Warmwasser fällt durch das nachfließende Kaltwasser die Innentemperatur des Warmwasserspeichers rasch bis zum Schmelzpunkt des schmelzbaren Materials. Bei weiterer Warmwasserentnahme wird die Wärmeenergie laufend aus der latenten Wärme des schmelzbaren Materials nachgeliefert, d.h. das Material erstarrt in dem Maße, wie Wärmeenergie entnommen wird. Erst wenn alles schmelzbare Material erstarrt ist, fällt die Temperatur weiter. Die Speicherkapazität ist erschöpft.

Sollte die Sonnenscheindauer nicht ausreichen, das gesamte schmelzbare Material zu schmelzen, so bleibt ein Teil in fester Form erhalten. Die Innentemperatur des Warmwasserspeichers liegt dennoch auf der Schmelztemperatur des schmelzbaren Materials. So wird erreicht, daß auch bei teilbeladenem Speicher die gewünschte Wassertemperatur erhalten wird. Dies ist ein entscheidender Vorteil der vorliegenden Erfindung gegenüber einem - dem Stand der Technik entsprechenden - Warmwasserspeicher für sensitive Wärme.

Ein weiterer Gegenstand der vorliegenden Erfindung betrifft einen solaren Warmwasserspeicher für den Temperaturbereich von 30° bis 100°C, wobei der Speicherraum mit Hohlkörpern gefüllt ist, die als Füllmaterial schmelzbare Carbonsäureamide und/oder Carbonsäureester enthalten, und das Warmwasser die Hohlkörper umspült.

Die nachfolgenden Beispiele sollen das Wesen der Erfindung näher erläutern und den praktischen Nutzen für die Speicherung von Solarwärme zur Warmwasserbereitung explizit darstellen.

### Beispiele

### Vergleichsbeispiel

Ein handelsüblicher Warmwasserspeicher gemäß Abbildung 3 mit 300 Liter Netto-Volumen wird mit Brauchwasser betrieben. Die spezifische Wärmekapazität der Wasserinhalts beträgt 4,18 J/g·K. Unter Annahme eines sinnvoll nutzbaren Temperaturbereichs von 60 bis 80°C beträgt die gesamte Wärmekapazität dieses Warmwasserspeichers
300 Liter · 1000 g/Liter · 4,18 J/g·K · ΔT 20 K = 25080 kJ
Selbst wenn man - was technisch problematisch und wegen Verbrühungsgefahr nicht ungefährlich ist - einen Temperaturbereich von 50 bis 90°C zulässt, beträgt die gesamte Speicherkapazität nur 50160 kJ.

### Beispiel 1

Es werden erfindungsgemäße Hohlkörper aus Polyamid (spezifische Wärme 1,4 J/g·K, Dichte 1,1 g/cm³) verwendet. Diese werden mit Propionamid gefüllt. Die wärmephysikalischen Parameter des eingesetzten Propionamids sind:
Schmelzpunkt: 77°C
Schmelzwärme: 242,4 J/g
spezifische Wärme in fester Phase: 2,0 J/g·K
spezifische Wärme in flüssiger Phase: 2,8 J/g·K
spezifisches Gewicht (geschmolzen): 0,87 g/cm³

Das Leergewicht der Hohlkörper beträgt 15 g. Das Bruttogewicht der mit Propionamid gefüllten Hohlkörper beträgt 315 g, somit sind je Hohlkörper 300 g Propionamid enthalten. Jeder Hohlkörper hat ein Brutto-Volumen von 0,360 Liter.

Die Form der Hohlkörper ist so gestaltet, dass eine volumenbasierte Schüttdichte von 74% (dichte Kugelpackung) resultiert.

Verwendet wird der aus dem Vergleichsbeispiel bekannte handelsübliche Warmwasserspeicher mit 300 Liter Speichervolumen. In diesen wurden 600 Stück der oben genannten Hohlkörper eingebracht, anschließend wurde das System an die Wasserleitung angeschlossen und die noch freien Leerräume im Speicher mit Wasser gefüllt. Der Warmwasserspeicher enthielt somit folgende Stoffe:
600 300 g = 180 kg Propionamid
600 15 g = 9,0 kg Hohlkörpermaterial aus Polyamid
300 - 600 0,360 = 84 Liter bzw. kg Wasser

Für einen Arbeitsbereich von 60 bis 80°C stellt sich die Wärmekapazität des Systems wie folgt dar:
von 60°C bis zum Schmelzpunkt von Propionamid (77°C):
   Beitrag des Propionamids: 180 kg · 2,0 J/g·K · 17 K = 6120 kJ
   Beitrag des Polyamids: 9 kg · 1,4 J/g·K · 17 K = 214 kJ
   Beitrag des Wassers: 84 kg · 4,18 J/g·K · 17 K = 5969 kJ

Latente Wärme am Schmelzpunkt von Propionamid:
180 kg · 242,4 J/g = 43632 kJ
von 77°C bis 80°C:
Beitrag des Propionamids: 180 kg · 2,8 J/g·K · 3 K = 1512 kJ
Beitrag des Polyamids: 9 kg · 1,4 J/g·K · 3 K = 38 kJ
Beitrag des Wassers: 84 kg · 4,18 J/g·K · 3 K = 1053 kJ

Die gesamte Wärmespeicherkapazität des Systems im Arbeitsbereich zwischen 60 und 80°C beträgt somit 58538 kJ. Das ist mehr als das doppelte des Vergleichsbeispiels, bzw. immer noch mehr als das Vergleichsbeispiel mit erweitertem Temperaturbereich.

Wird der zulässige Temperaturbereich auf 50 bis 90°C erweitert, so ergibt die Rechnung eine Speicherkapazität von 74453 kJ. Das ist fast das 1,5-fache gegenüber dem Vergleichsbeispiel.

### Beispiel 2

Es werden erfindungsgemäße Hohlkörper aus Aluminium (spezifische Wärme 0,9 J/g·K, Dichte 2,70 g/cm³) verwendet. Diese werden mit Glyceryltripalmitat gefüllt. Die wärmephysikalischen Parameter sind:
Schmelzpunkt: 65°C
Schmelzwärme: 260,4 J/g
spezifische Wärme in fester Phase: ca. 2,1 J/g·K
spezifische Wärme in flüssiger Phase: ca. 2,8 J/g·K
spezifisches Gewicht (bei ca. 70°C): 0,98 g/cm³

Das Leergewicht der Hohlkörper beträgt 15 g. Das Bruttogewicht der mit Glyceryltripalmitat gefüllten Höhlkörper beträgt 155 g, somit sind je Hohlkörper 140 g Glyceryl-tripalmitat enthalten. Die Hohlkörper haben ein Brutto-Volumen von 150,6 cm³, so dass in jeden Hohlkörper ein Luftvolumen von 2,2 cm³ verbleibt.

Die Form der Hohlkörper ist so gestaltet, dass eine volumenbasierte Schüttdichte von 78% (dichte Kugelpackung) resultiert.

Verwendet wird der aus dem Vergleichsbeispiel bekannte handelsübliche Warmwasserspeicher mit 300 Liter Speichervolumen. In diesen wurden 1550 Stück der oben genannten Hohlkörper eingebracht, anschließend wurde das System an die Wasserleitung angeschlossen und die noch freien Leerräume im Speicher mit Wasser gefüllt. Der Warmwasserspeicher enthielt somit folgende Stoffe:
1550 · 140 g = 217 kg Glyceryl-tripalmitat
1550·15 g = 23,25 kg Hohlkörpermaterial aus Aluminium
300 - 600 · 0,3678 = 66,6 Liter bzw. kg Wasser

Für einen Arbeitsbereich von 50 bis 70°C stellt sich die Wärmekapazität des Systems wie folgt dar:
von 50°C bis zum Schmelzpunkt von Glyceryl-tripalmitat (65°C):
   Beitrag des Gylceryl-tripalmitats: 217 kg · 2,1 J/g·K · 15 K = 6836 kJ
   Beitrag der Aluminium-Hohlkörper: 23,25 kg · 0,9 J/g·K · 15 K = 314 kJ
   Beitrag des Wassers: 66,6 kg · 4,18 J/g·K · 15 K = 4176 kJ

Latente Wärme am Schmelzpunkt von Glyceryl-tripalmitat:
217 kg · 260,4 J/g = 56507 kJ
von 65°C bis 70°C:
Beitrag des Gylceryl-tripalmitats: 217 kg · 2,8 J/g·K · 5 K = 3038 kJ
Beitrag der Aluminium-Hohlkörper: 23,25 kg - 0,9 J/g·K · 5 K = 105 kJ
Beitrag des Wassers: 66,6 kg · 4,18 J/g·K · 5 K = 1392 kJ

Die gesamte Wärmespeicherkapazität des Systems im Arbeitsbereich zwischen 50 und 70°C beträgt somit 72368 kJ. Das ist fast das dreifache des Vergleichsbeispiels bei einem zulässigen Temperaturintervall von 20 Kelvin. Wird der zulässige Temperaturbereich auf 50 bis 90°C erweitert, so ergibt die Rechnung eine Speicherkapazität von 90506 kJ. Das ist das 1,8-fache gegenüber dem Vergleichsbeispiel.

Die beiden Beispiele zeigen exemplarisch, wie durch Einbringung der erfindungsgemäßen, mit einem schmelzbaren Stoff gefüllten Behälter die Speicherkapazität eines solaren Warmwasserspeichers drastisch erhöht werden kann, ohne dass zusätzliche Installationen bzw. zusätzlicher Raumbedarf erforderlich werden.

## Patentansprüche

1. Verwendung von mit schmelzbaren Materialien gefüllten Hohlkörpern als Latentwärmespeicher in solaren Warmwasserspeichern, **dadurch gekennzeichnet, dass** die schmelzbaren Materialien Carbonsäureamide der allgemeinen Formel (I)
R¹-CONHR² (I)
und/oder Carbonsäureester der allgemeinen Formel (II)
R¹-COOR³ (II)
umfassen, wobei
R¹ = n-C₁-C₂₄-Alkylrest, insbesondere n-C₃-C₂₄-Alkylrest,
R² = H, einen ggf. mit OH-, R³O- oder NH₂-Gruppen substituierten C₁-C₂₄-Alkylrest, insbesondere C₃-C₂₄-Alkylrest
R³ = einen ggf. mit OH-, R³O- oder NH₂-Gruppen substituierten C₁-C₂₄-Alkylrest, insbesondere C₃-C₂₄-Alkylrest
bedeuten,
und wobei das Material der Hohlkörper für die Carbonsäureamide und/oder Carbonsäureester Kunststoffe, die ausgewählt sind aus Polyethylen, Polypropylen, Polyvinylchlorid, Polyamid, Polyester und/oder Polycarbonat, oder Metalle, wie z. B. Aluminium, Kupfer, Bronze, Messing, ferritischen Stahl oder austenitischen legiertem Stahl umfasst.

2. Verwendung nach Anspruch 1, **dadurch gekennzeichnet, dass** die Carbonsäureamide und/oder Carbonsäureester einen Schmelzpunkt von 30 °C bis 110 °C vorzugsweise 40°C bis 80°C aufweisen.

3. Verwendung nach Anspruch 1 oder 2, **dadurch gekennzeichnet, dass** die Carbonsäureamide und/oder Carbonsäureester eine Schmelzwärme von mindestens 160 J/g vorzugsweise ≥ 200 J/g besitzen.

4. Verwendung nach einem der Ansprüche 1 bis 3, **dadurch gekennzeichnet, dass** die Carbonsäureamide ausgewählt sind aus der Gruppe Acetamid, Propionamid, Caproamid, Caprinamid, Pelargonamid, Lauramid, Myristinamid, Palmitinamid, Stearinamid sowie N-Stearylstearamid.

5. Verwendung nach einem der Ansprüche 1 bis 3, **dadurch gekennzeichnet, dass** als Carbonsäureester ein n-C₁-C₄-Alkylstearat, ein n-C₁-C₄-Alkylpalmitat, Glyceryltrilaurat, Glyceryltripalmitat, Glyceryl-tristearat, 1,2-Ethylen-bis-stearat, 1,2-Ethylen-bis-palmitat, Diethylenglykol-distearat, Diethylenglykol-bis-palmitat, Stearamidoethylstearat bzw. Mischungen davon eingesetzt werden.

6. Verwendung nach einem der Ansprüche 1 bis 5, **dadurch gekennzeichnet, dass** das Nettovolumen der Hohlkörper im Bereich zwischen 1 cm³ und 1.500 cm³, insbesondere zwischen 30 cm³ und 300 cm³ liegt.

7. Verwendung nach einem der Ansprüche 1 bis 6, **dadurch gekennzeichnet, dass** die Hohlkörper im Umriss im Wesentlichen Kugelform besitzen.

8. Verwendung nach einem der Ansprüche 1 bis 7, **dadurch gekennzeichnet, dass** die Hohlkörper zur Vergrößerung der Kontaktfläche noch Einbuchtungen und/oder Höhlungen aufweisen.

9. Verwendung nach einem der Ansprüche 1 bis 8, **dadurch gekennzeichnet, dass** die mit Carbonsäureamiden und/oder Carbonsäureestern gefüllten Hohlkörper hermetisch dicht sind.

10. Verwendung nach einem der Ansprüche 1 bis 9, **dadurch gekennzeichnet, dass** die Hohlkörper in loser Schüttung in einen solaren Warmwasserspeicher eingebracht werden.

11. Verwendung nach einem der Ansprüche 1 bis 10, **dadurch gekennzeichnet, dass** die Schüttung ein nutzbares Volumenverhältnis von Behältervolumen zu Gesamtvolumen der Schüttung von 0,5:1 bis 0,85: 1 besitzt.

12. Solarer Warmwasserspeicher für den Temperaturbereich von 30 ° bis 100 °C, **dadurch gekennzeichnet, dass** der Speicherraum mit Hohlkörpern entsprechend der Ansprüche 1 bis 11 gefüllt ist und dass das Warmwasser die Hohlkörper umspült.

## Claims

1. Use of hollow articles filled with fusible materials as latent heat accumulators in solar hot water storage tanks, **characterised in that** the fusible materials comprise carboxamides of the general formula (I)
**R¹-CONHR²** (I)
and/or carboxylic acid esters of the general formula (II)
**R¹-COOR³** **(II)**
wherein
R¹ = n-C₁-C₂₄ alkyl residue, in particular n-C₃-C₂₄ alkyl residue,
R² = H, a C₁-C₂₄ alkyl residue, in particular C₃-C₂₄ alkyl residue, optionally substituted with OH, R³O or NH₂ groups,
R³ = a C₁-C₂₄ alkyl residue, in particular C₃-C₂₄ alkyl residue, optionally substituted with OH, R³O or NH₂ groups,
and wherein the material of the hollow articles for the carboxamides and/or carboxylic acid esters comprises plastics which are selected from polyethylene, polypropylene, polyvinyl chloride, polyamide, polyester and/or polycarbonate, or metals, such as for example aluminium, copper, bronze, brass, ferritic steel or austenitic alloy steel.

2. Use according to claim 1, **characterised in that** the carboxamides and/or carboxylic acid esters exhibit a melting point of 30°C to 110°C, preferably of 40°C to 80°C.

3. Use according to claim 1 or claim 2, **characterised in that** the carboxamides and/or carboxylic acid esters have a heat of fusion of at least 160 J/g preferably of ≥ 200 J/g.

4. Use according to any one of claims 1 to 3, **characterised in that** the carboxamides are selected from the group acetamide, propionamide, caproamide, capricamide, pelargonamide, lauramide, myristamide, palmitamide, stearamide and N-stearyl stearamide.

5. Use according to any one of claims 1 to 3, **characterised in that** the carboxylic acid ester used is an n-C₁-C₄ alkyl stearate, an n-C₁-C₄ alkyl palmitate, glyceryl trilaurate, glyceryl tripalmitate, glyceryl tristearate, 1,2-ethylene-bis-stearate, 1,2-ethylene-bis-palmitate, diethylene glycol distearate, diethylene glycol bis-palmitate, stearamidoethyl stearate or mixtures thereof.

6. Use according to any one of claims 1 to 5, **characterised in that** the net volume of the hollow articles is in the range between 1 cm³ and 1,500 cm³, in particular between 30 cm³ and 300 cm³.

7. Use according to any one of claims 1 to 6, **characterised in that** the hollow articles are substantially spherical in outline.

8. Use according to any one of claims 1 to 7, **characterised in that**, in order to enlarge the contact surface, the hollow articles additionally comprise indentations and/or cavities.

9. Use according to any one of claims 1 to 8, **characterised in that** the hollow articles filled with carboxamides and/or carboxylic acid esters are hermetically sealed.

10. Use according to any one of claims 1 to 9, **characterised in that** the hollow articles are placed in a solar hot water storage tank as loose bulk material.

11. Use according to any one of claims 1 to 10, **characterised in that** the bulk material has an effective volume ratio of tank volume to total volume of the bulk material of 0.5:1 to 0.85:1.

12. A solar hot water storage tank for the temperature range from 30° to 100°C, **characterised in that** storage space is filled with hollow articles according to claims 1 to 11 and **in that** the hot water flows around the hollow articles.

## Revendications

1. Utilisation de corps creux remplis de matières fusibles en tant qu'accumulateurs de chaleur latente dans des chauffe-eau solaires à accumulation, **caractérisée en ce que** les matières fusibles sont des amides d'acides carboxyliques de la formule générale (I)
**R¹-CONHR²** **(I)**
et/ou des esters d'acides carboxyliques de la formule générale (II)
**- R¹-COOR³** **(II)**
dans lesquelles
R¹ = un radical alkyle n-C₁-C₂₄-alkyle, en particulier un radical alkyle n-C₃-C₂₄
R² = H, un radical alkyle C₁-C₂₄-alkyle, en particulier un radical alkyle C₃-C₂₄, le cas échéant substitué par des groupes OH-, R³O- ou NH₂-,
R³ = un radical alkyle C₁-C₂₄-alkyle, en particulier un radical alkyle C₃-C₂₄, le cas échéant substitué par des groupes OH-, R³O- ou NH₂-,
et dans laquelle la matière des corps creux pour les amides d'acides carboxyliques et/ou les esters d'acides carboxyliques comprend des matières plastiques, qui sont sélectionnées parmi le polyéthylène, le polypropylène, le chlorure de polyvinyle, le polyamide, le polyester et/ou le polycarbonate, ou des métaux tels que, par exemple, l'aluminium, le cuivre, le bronze, le laiton, l'acier ferritique ou l'acier allié austénitique.

2. Utilisation selon la revendication 1, **caractérisée en ce que** les amides d'acides carboxyliques et/ou les esters d'acides carboxyliques présentent un point de fusion compris entre 30 et 110 °C, de préférence entre 40 et 80 °C.

3. Utilisation selon la revendication 1 ou 2, **caractérisée en ce que** les amides d'acides carboxyliques et/ou les esters d'acides carboxyliques possèdent une chaleur de fusion d'au moins 160 J/g, de préférence égale ou supérieure à 200 J/g.

4. Utilisation selon l'une des revendications 1 à 3, **caractérisée en ce que** les amides d'acides carboxyliques sont sélectionnés parmi le groupe comprenant l'acétamide, le propionamide, le caproamide, le caprinamide, le pelargonamide, le lauramide, le myristinamide, le palmitinamide, le stéarinamide et le N-stéarylstéaramide.

5. Utilisation selon l'une des revendications 1 à 3, **caractérisée en ce que** sont mis en oeuvre comme esters d'acides carboxyliques, un stéarate d'alkyle n-C₁-C₄, un palmitate d'alkyle n-C₁-C₄, un trilaurate de glycéryle, un tripalmitate de glycéryle, un tristéarate de glycéryle, un bis-stéarate de 1,2-éthylène, un bis-palmitate de 1,2-éthylène, un distéarate de diéthylèneglycol, un bis-palmitate de diéthylèneglycol, un stéarate de stéaramidoéthyle ou des mélanges de ceux-ci.

6. Utilisation selon l'une des revendications 1 à 5, **caractérisée en ce que** le volume net des corps creux se situe dans l'intervalle de 1 cm³ à 1 500 cm³, en particulier de 30 cm³ à 300 cm³.

7. Utilisation selon l'une des revendications 1 à 6, **caractérisée en ce que** les corps creux possèdent essentiellement un contour sphérique.

8. Utilisation selon l'une des revendications 1 à 7, **caractérisée en ce que** les corps creux présentent encore des renforcements et/ou des concavités afin d'agrandir la surface de contact.

9. Utilisation selon l'une des revendications 1 à 8, **caractérisée en ce que** les corps creux remplis d'amides d'acides carboxyliques et/ou d'esters d'acides carboxyliques sont hermétiquement scellés.

10. Utilisation selon l'une des revendications 1 à 9, **caractérisée en ce que** les corps creux sont introduits par déversement en vrac dans un chauffe-eau solaire à accumulation.

11. Utilisation selon l'une des revendications 1 à 10, **caractérisée en ce que** la matière déversée présente un rapport en volume utile entre le volume du récipient et le volume total de la matière déversée compris entre 0,5:1 et 0,85:1.

12. Chauffe-eau solaire à accumulation pour la plage de températures s'étendant de 30 °C à 100 °C, **caractérisé en ce que** l'espace d'accumulation est rempli de corps creux selon les revendications 1 à 11 et que l'eau chaude circule autour des corps creux.
